# EUROPEAN PATENT APPLICATION

(11) **EP 4 618 428 A1**
(43) Date of publication of application: **17.09.2025**
(21) Application number: 23910730.3
(22) Date of filing: 27.12.2023
(51) Int. Cl.: H04B 1/40

(54) **COMMUNICATION DEVICE, SENSING DEVICE, AND COMMUNICATION-SENSING INTEGRATED DEVICE**

(30) Priority: 28.12.2022 CN 202211697476
(71) Applicant: ZTE CORPORATION, Shenzhen, Guangdong 518057 (CN)
(72) Inventor: WU, Jian, Shenzhen, Guangdong 518057 (CN); PAN, Xiaojun, Shenzhen, Guangdong 518057 (CN); LUO, Zhifang, Shenzhen, Guangdong 518057 (CN); HU, Xuedong, Shenzhen, Guangdong 518057 (CN); YE, Yong, Shenzhen, Guangdong 518057 (CN); JIN, Hefei, Shenzhen, Guangdong 518057 (CN)
(74) Representative: Ziebig Hengelhaupt Intellectual Property Attorneys Patentanwaltskanzlei PartGmbB
(86) International application number: PCT/CN2023/142379
(87) International publication number: WO 2024/140811

(57) **Abstract**

The embodiments of the present application provide a communication device, a sensing device, and a communication-sensing integrated device. The communication device comprises: at least one first path, which is used for sending a first communication signal and/or a first sensing signal, and receiving a second communication signal; and at least one second path, which is used for sending a third communication signal, and receiving a fourth communication signal and/or a second sensing signal; wherein a first port is configured in the first path, the first port being used for coupling part of the first sensing signal to a sensing device; and a second port is configured in the second path, the second port being used for transmitting the second sensing signal to the sensing device.

## Description

### CROSS REFERENCE TO RELATED APPLICATIONS

This application is based upon and claims priority to Chinese Patent Application No. 202211697476.6 filed on December 28, 2022, entitled "Communication device, sensing device and communication-sensing integrated device", the entire contents of which are incorporated herein by reference.

### TECHNICAL FIELD

The disclosure relates to the technical field of communication device, in particular to a communication device, a sensing device and an integrated communication sensing device.

### BACKGROUD

In an existing network device, communication and sensing often exist independently, for example, a communication system is responsible for communication, and a radar system is responsible for speed measurement, induction imaging and other functions, which results in waste of wireless spectrum and hardware resources, and the independence of functions also brings about problems such as long delay of signal processing.

### SUMMARY

Embodiments of the present disclosure provide a communication device, a sensing device and an integrated communication sensing device.

In order to solve the above-mentioned technical problems, the embodiments of the present application are implemented by the following aspects.

In a first aspect, an embodiment of the present application provides a communication device, the communication device includes: at least one first path used for sending a first communication signal and/or a first sensing signal, and receiving a second communication signal; at least one second path used for sending a third communication signal, and receiving a fourth communication signal and/or a second sensing signal; wherein a first port is configured in the first path, the first port is used for coupling part of the first sensing signal to a sensing device; and a second port is configured in the second path, the second port is used for transmitting the second sensing signal to the sensing device.

In a second aspect, an embodiment of the present application provides a sensing device, the sensing device includes: a sensing receiving unit, the sensing receiving unit is configured with a first port and a second port, wherein the first port is used to receive a third sensing signal, the second port is used to receive a second sensing signal; wherein the third sensing signal is a part of a first sensing signal sent by a communication device, and the second sensing signal is a sensing signal received by the communication device.

In the third aspect, an embodiment of the present application provides an integrated communication sensing device, which includes a communication device and a sensing device; wherein a first port of the communication device is connected to a first port of the sensing device, so as to couple a part of a first sensing signal sent by the communication device to the sensing device; and a second port of the communication device is connected to a second port of the sensing device, so as to transmit a second sensing signal received by the communication device to the sensing device.

### BRIEF DESCRIPTION OF THE DRAWINGS

In order to more clearly illustrate the technical solutions in the embodiments of the present application or in the related art, the drawings required for use in the description of the embodiments or the related art will be briefly introduced therebelow, obviously, the drawings described below are only some embodiments described in the present application, and other drawings can be obtained by those skilled in the art based on these drawings without paying creative labor.
FIG. 1 is one schematic structural diagrams of a communication device provided by embodiments of the present application.
FIG. 2 is one schematic structural diagram of a first path provided by embodiments of the present application.
FIG. 3 is another schematic structural diagram of a first path provided by embodiments of the present application.
FIG. 4 is one schematic structural diagram of a second path provided by embodiments of the present application.
FIG. 5 is another schematic structural diagram of a second path provided by embodiments of the present application.
FIG. 6 is another schematic structural diagram of a second path provided by embodiments of the present application.
FIG. 7 is another schematic structural diagram of a communication device provided by embodiments of the present application.
FIG. 8 is a schematic structural diagram of a sensing device provided by embodiments of the present application.
FIG. 9 is one schematic structural diagram of an integrated communication sensing device provided by embodiments of the present application.
FIG. 10 is another schematic structural diagram of an integrated communication sensing device provided by embodiments of the present application.
FIG. 11 is another schematic structural diagram of an integrated communication and sensing transmission frame provided by embodiments of the present application.
FIG. 12 is another schematic structural diagram of an integrated communication sensing device provided by embodiments of the present application.

### DETAILED DESCRIPTION

In order to enable those skilled in the art to better understand the technical solutions in the application, technical solutions in embodiments of the application will be described clearly and thoroughly below with reference to the accompanying drawings in embodiments of the application. Obviously, the embodiments described are part of the embodiments of the application rather than all of the embodiments. All other embodiments obtained by a person skilled in the art without creative work based on embodiments in the application should fall within the scope of the application.

A communication device, a sensing device and an integrated communication sensing device provided by the present application are illustrated below in conjunction with the accompanying drawings, and the content is as follows.

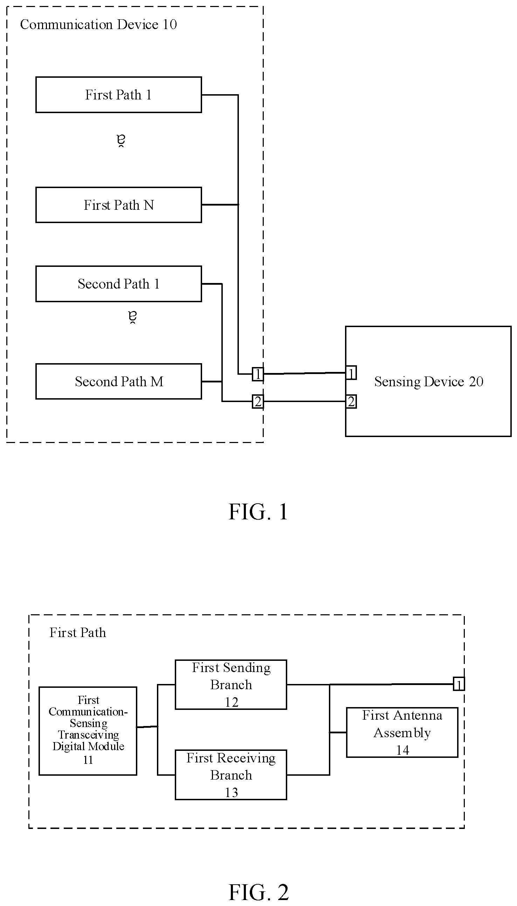

As shown in FIG. 1, which is a schematic structural diagram of a communication device 10 provided by an exemplary embodiment of the present application, the communication device 10 includes at least one first path and at least one second path.

The at least one first path is used for sending a first communication signal and/or a first sensing signal, and receiving a second communication signal, a first port 1 (also referred to as a local transmission radio frequency signal interface) is configured in the first path, the first port 1 is used for coupling a part of the first sensing signal (i.e., a third communication signal) to a sensing device 20. That is, the communication device 10 may simultaneously control all of the first paths to send a first communication signal, or receive a second communication signal, or send a first sensing signal; alternatively, the communication device 10 may also control one part of the plurality of first paths to send a first communication signal and receive a second communication signal, and control the other part of the plurality of first paths to send a first sensing signal, etc., which is not limited in this embodiment.

The at least one second path is used for sending a third communication signal, and receiving a fourth communication signal and/or a second sensing signal. The second path is configured with a second port 2 (also referred to as a sensing radio frequency signal interface), the second port 2 is used for transmitting the second sensing signal to the sensing device. That is, the communication device 10 may simultaneously control all of the second paths to send a third communication signal, or receive a fourth communication signal, or send a second sensing signal; alternatively, the communication device 10 may also control one part of the plurality of second paths to send a third communication signal and receive a fourth communication signal, and control the other part of the plurality of second paths to send a second sensing signal, etc., which is not limited in this embodiment.

It can be understood that the aforementioned first communication signal and the subsequently mentioned second communication signal, third communication signal, and fourth communication signal are used to implement communication functions such as information interaction between different communication devices, and the type of the communication signal is not limited in this embodiment.

In addition, the aforementioned first sensing signal and second sensing signal are used to implement sensing functions such as speed measurement and induction imaging. In this embodiment, the second sensing signal may be, but is not limited to, a reflected signal of the first sensing signal sent by the communication device, which is used by the sensing device to implement a sensing function based on the third sensing signal and the second sensing signal.

In this embodiment, by means of the smart design of the communication device, a sensing signal can be sent and received on the basis of the same communication device, and the sensing signal is sent and received in different channels, which reduces the hardware cost, facilitates unified scheduling and promotion, and adapts to the needs of different scenarios; sending can be isolated from receiving, so as to avoid signal interference, reduce the signal processing delay, and meet the joint scheduling of communication and sensing resources in the event of overlapping between communication spectrum and sensing spectrum in mobile communication systems such as a 5G and 6G system, and the problem in related art that the communication and sensing systems need to be designed separately due to differences in functions and specifications can be overcome.

In addition, in this embodiment, by inputting the received sensing radio frequency signal (i.e., the second sensing signal) and the locally-sent sensing radio frequency signal (i.e., the third sensing signal) into the sensing device so as to subject them to processing by the sensing device 20, such as interference elimination, sensing processing, etc., the sensing needs in different scenarios can be further met. That is to say, compared with sending and receiving of a sensing signal by the same device in the related art, in this embodiment, the sensing needs in different scenarios can be further met and the sensing performance is ensured by combining the communication device 10 with the sensing device.

Further, in this embodiment, there are a plurality of ways to implement the first path, for example, referring to FIG. 2, the first path may include: a first integrated communication and sensing (ICAS) transceiving digital module 11, a first sending branch 12, a first receiving branch 13, and a first antenna assembly 14. The first ICAS transceiving digital module 11 is connected to the first receiving branch 13 and the first sending branch 12, the first antenna assembly 14 is connected to the first receiving branch 13 and the first sending branch 12, and the first sending branch 12 is connected to the first port 1.

In this embodiment, the first ICAS digital transceiving module 11 has the function of performing digital modulation and filtering on a data source of communication and/or sensing sending, such as performing modulation and filtering on the first communication signal and first sensing signal to-be-sent, and performing demodulation and filtering on the received second communication signal, where the structure of the first ICAS transceiving digital module 11 is limited in this embodiment.

The first sending branch 12 is used for sending the first communication signal and/or the first sensing signal. Optionally, the first communication signal and the first sensing signal may multiplex the same first sending branch to implement simultaneous sending of the first communication signal and the first sensing signal, for example the first communication signal and the first sensing signal are sent separately in a time-division manner, or they may correspond to different sending branches, so as to send the first communication signal and the first sensing signal by different sending branches, etc.

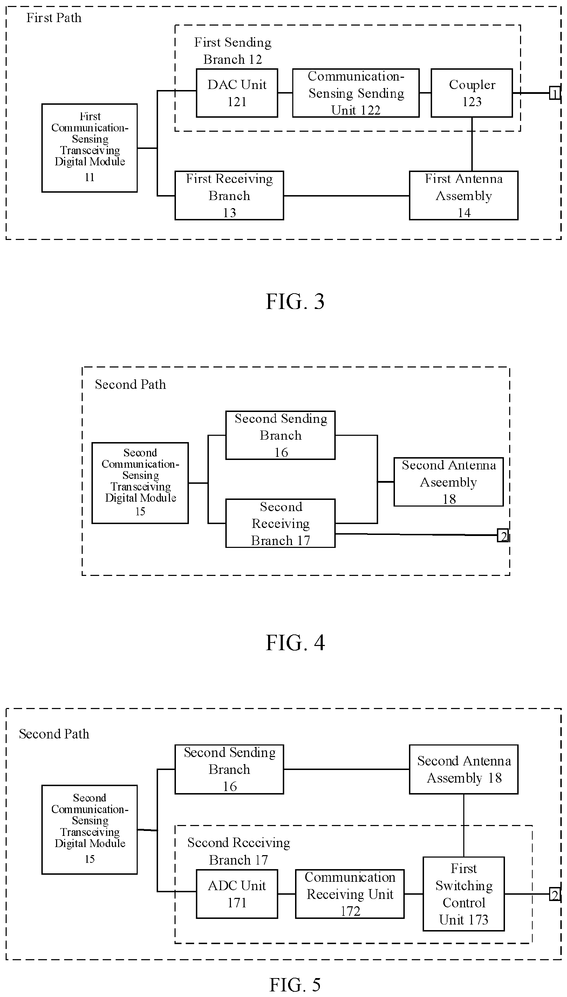

In this embodiment, the first sending branch 12 may have various circuit forms, for example, referring to FIG. 3, the first sending branch 12 may include a digital-to-analog converter (DAC) unit 121, an ICAS sending unit 122 and a coupler 123.

The DAC unit is connected to the first ICAS transceiving digital module 11 and the ICAS sending unit 122, and is used to input the to-be-sent digital signal (i.e., the first communication signal or the first sensing signal) output by the first ICAS transceiving digital module 11 into the DAC unit 121 for digital-to-analog conversion, and then input the to-be-sent signal after the digital-to-analog conversion into the ICAS sending unit 122 for frequency conversion, filtering, amplification and other processing.

The coupler 123 is connected to the ICAS sending unit 122, and the first antenna assembly 14 and the first port 1. When the to-be-sent signal is a first communication signal, the coupler 123 is used to couple the first communication signal output from the ICAS sending unit 122 to the first antenna assembly 14 for sending. Alternatively, when the to-be-sent signal is a first sensing signal, the coupler 123 is used to couple a part of the first sensing signal (such as the third sensing signal) output from the ICAS sending unit 122 to the first port 1 and then input it into the sensing device 12, and couple the other part to the first antenna assembly 14 for sending.

The first receiving branch 13 is used to receive the second communication signal sent by other communication devices. In this embodiment, the structure of the first receiving branch may be in a variety of forms. For example, the first receiving branch 13 may include a communication receiving unit for amplifying, frequency converting, and filtering the second communication signal received by the first antenna assembly 14, an analog-to-digital converter (ADC) unit for performing analog-to-digital conversion on the second communication signal output by the communication receiving unit, etc., which is not limited here.

The first antenna assembly 14 is used to radiate a communication signal (such as a first communication signal) and a sensing signal (such as a first sensing signal) into space, and/or the first antenna assembly 14 is used to receive a signal in space, such as a second communication signal. In this embodiment, in order to implement the above-mentioned functions, the structure of the first antenna assembly 14 may be in a variety of forms. For example, as one possible implementation, the first antenna assembly 14 may include a multi-path combination-and-division module, a multi-path amplitude and phase modulation module, an antenna array, etc., wherein the multi-path combination-and-division module is used to divide a radio frequency signal (such as a first communication signal, a first sensing signal) into multi-path radio frequency signals, or to combine the received multi-path radio frequency signals (such as the second communication signal) into one path; the multi-path amplitude and phase modulation module is used to adjust the amplitude and phase of a sending antenna array element (and/or the receiving antenna array element) to implement beam-forming; the antenna array is used to radiate a communication signal into space or receive a communication signal in space, etc.

For another example, the first antenna assembly 14 may also include an antenna element for radiating communication signals or sensing signals into space, or receiving communication signals, sensing signals, etc., in space, which is not limited here.

In this embodiment, by arranging an array antenna, such as the aforementioned antenna array or antenna element, not only broadband communication may be implemented, but also sensing echo signals may be received to implement enhanced sensing capability.

Further, as shown in FIG. 4, the second path may include a second ICAS transceiving digital module 15, a second sending branch 16, a second receiving branch 17, and a second antenna assembly 18. The second ICAS transceiving digital module 15 is connected to the second sending branch 16 and the second receiving branch 17, the second antenna assembly 18 is connected to the second sending branch 16 and the second receiving branch 17, and the second receiving branch 17 is connected to the second port 2.

In this embodiment, the second ICAS transceiving digital module 15 has the function of performing modulation/demodulation, filtering and the like on received sensing signals, communication signals, and to-be-sent communication signals. For example, the second ICAS transceiving digital module 15 may perform modulation, filtering and the like on to-be-sent third communication signal, and perform demodulation, filtering and the like on received fourth communication signal and second sensing signal. This embodiment does not limit the structure of the second ICAS transceiving digital module 15.

The second sending branch 16 is used to send the third communication signal. In this embodiment, the structure of the second sending branch 16 may be in a variety of forms. For example, the second sending branch 16 may include a DAC unit for performing digital-to-analog conversion on the to-be-sent third communication signal output by the second ICAS transceiving digital module 15, a communication sending unit for performing amplifying, frequency conversion, and filtering on the to-be-sent third communication signal, etc., which is not limited here. It can be understood that the third communication signal may be the same as or different from the aforementioned first communication signal, which is not limited here.

The second receiving branch 17 is used for sending the fourth communication signal and/or the second sensing signal. The fourth communication signal may be the same as or different from the aforementioned second communication signal, which is not limited here. In addition, in order to implement the function of receiving the fourth communication signal and/or the second sensing signal, the structure of the second receiving branch 17 may be in a variety of forms. For example, referring to FIG. 5, the second receiving branch 17 may include an ADC unit 171, a communication receiving unit 172 and a first switching control unit 173.

The ADC unit 171 is connected to the second ICAS transceiving digital module 15 and the communication receiving unit 172, the first switching control unit 173 is connected to the communication receiving unit 172, the second antenna assembly 18 and the second port 2. In this embodiment, when the communication device 10 determines to receive the second sensing signal by the second receiving branch 17, the communication device 10 may control the first switching control unit 173 to connect the second antenna assembly 18 to the second port 2 and disconnect the second antenna assembly 18 from the communication receiving unit 172, so that the second sensing signal received by the second antenna assembly 18 may be input into the sensing device by the second port 2.

Alternatively, when the communication device 10 determines to receive the fourth communication signal by the second receiving branch 17, the communication device 10 may control the first switching control unit 173 to connect the second antenna assembly 18 to the communication receiving unit 172 and disconnect the second antenna assembly 18 from the second port 2. As a result, the fourth communication signal received by the second antenna assembly 18 may be sequentially input into the communication receiving unit 172 and the ADC unit 171 for processing.

Optionally, considering that the first switching control unit 173 is used to implement switching between a sensing receiving channel and a communication receiving channel, therefore, in this embodiment, the first switching control unit 173 may include, but is not limited to, any one of a single-pole multi-throw switch (such as a single-pole triple-throw switch or a single-pole double-throw switch, etc.), a coupler, or a power divider. For example, when the communication receiving channel is connected, that is, the fourth communication signal is received, the sensing device 20 may be turned off by any one of the single-pole multi-throw switch, coupler, or power divider, so that the received fourth communication signal may only pass through the communication receiving unit 172; when the sensing receiving channel is connected, that is, the first sensing signal is received, the communication receiving unit 172 may be turned off by any one of the single-pole multi-throw switch, coupler, or power divider, and the first sensing signal may only be input into the sensing device, thereby enabling independent processing of a sensing signal and a communication signal.

Based on the description of the aforementioned implementations, as one possible implementation, the sensing device 20 may autonomously process the received third sensing signal and the second sensing signal to implement the sensing function, that is, the sensing device 20 may be configured with an ADC unit, a sensing receiving digital module, etc.

Alternatively, the shown sensing device 20 may perform self-interference elimination on the received third sensing signal and the second sensing signal, and then the third sensing signal and the second sensing signal are transmitted to the communication device 10 to multiplex the data processing function (such as ADC unit, sensing receiving digital module, etc.) of the communication device 10, thereby implementing the sensing function.

Based on this, as one possible implementation, assuming that the sensing device 20 multiplexes the data processing function of the communication device 10 to implement the sensing function, then the second receiving path may further be configured with a third port (also referred to as a radio frequency signal interface); the third port is used to connect to the sensing device 20, so as to transmit to the communication device 10the third sensing signal and the second sensing signal both received by the sensing device 20.

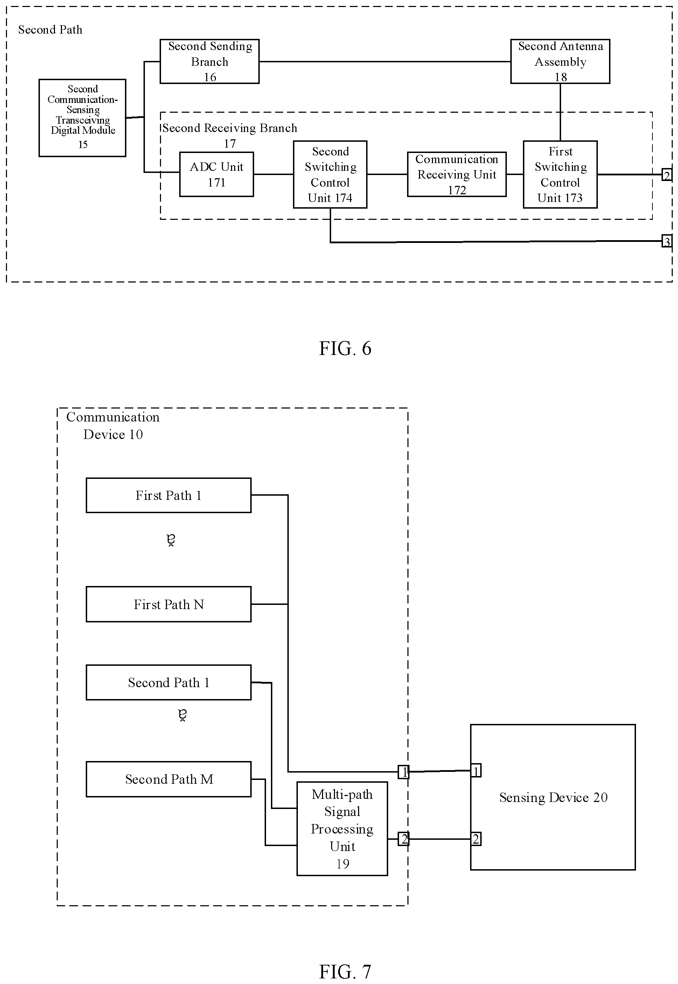

Correspondingly, referring to FIG. 6, the second receiving branch 17 may further include a second switching control unit 174; the second switching control unit 174 is connected to the ADC unit 171, the communication receiving unit 172 and the third port 3. When the communication device 10 determines to send the first sensing signal by the first antenna assembly 14 and receive the second sensing signal by the second antenna assembly 18, the communication device 10 may control the second switching control unit 174 to connect the ADC unit 171 to the third port 3 and disconnect the ADC unit 171 from the communication receiving unit 172, so that the third sensing signal and the second sensing signal input into the sensing device 20 by the first port 1 and the second port 2 may be sequentially input into the second switching control unit 174, the ADC unit 171 and the second ICAS transceiving digital module 15 for processing to implement the sensing function.

Alternatively, when the communication device 10 determines to receive the fourth communication signal by the second antenna assembly 18, the communication device 10 may control the second switching control unit 174 to connect the ADC unit 171 to the communication receiving unit 172 and disconnect the ADC unit 171 from the third port 3, so that the fourth communication signal received by the second antenna assembly 18 may be sequentially input into the first switching control unit 173, the communication receiving unit 172, the second switching control unit 174, the ADC unit 171, and the second ICAS transceiving digital module 15 for processing.

Optionally, similar to the aforementioned first switching control unit 173, considering that the second switching control unit 174 is also used to implement switching between a sensing receiving channel and a communication receiving channel, therefore, in this embodiment, the second switching control unit 174 may also include, but is not limited to, any one of a single-pole multi-throw switch, a coupler, or a power divider. For example, when the communication receiving channel is connected, that is, the fourth communication signal is received, the sensing device 20 may be turned off by any one of a multi-choice switch, a coupler, and a power divider, so that the received fourth communication signal passes through the first switching control unit 173, the communication receiving unit 172, the second switching control unit 174, and the ADC unit 171 in sequence; when the sensing receiving channel is connected, that is, the first sensing signal is sent by the first antenna assembly 14 and the second sensing signal is received by the second antenna assembly 18, the communication receiving unit 172 may be turned off by any one of the multi-choice switch, coupler, or power divider, at this time, the third sensing signal and the second sensing signal enter the second switching control unit 174, the ADC unit 171, etc., in sequence by the sensing device, thereby enabling independent processing of a sensing signal and a communication signal.

Further, similar to the aforementioned first antenna assembly, the first antenna assembly 18 is used to radiate a communication signal (such as a third communication signal) into space, and/or the first antenna assembly 14 is used to receive a communication signal (such as a fourth communication signal) and/or a sensing signal (such as a second sensing signal) in space. In this embodiment, in order to implement the above-mentioned functions, the structure of the second antenna assembly 18 may be in a variety of forms. For example, as one possible implementation, the second antenna assembly 18 may include a multi-path combination-and-division module, a multi-path amplitude and phase modulation module, an antenna array, etc., where the multi-path combination-and-division module is used to divide a to-be-sent radio frequency signal (such as a third communication signal) into multi-path radio frequency signals, or to combine the received multi-path radio frequency signals (such as the fourth communication signal, the second sensing signal) into one path; the multi-path amplitude and phase modulation module is used to adjust the amplitude and phase of a sending antenna array element (and/or the receiving antenna array element) to implement beam-forming; the antenna array is used to radiate a communication signal into space or receive a communication signal in space, etc.

For another example, the second antenna assembly 18 may also include an antenna element for radiating communication signals or sensing signals into space or receiving communication signals, sensing signals, etc., in space, which is not limited here.

In this embodiment, by arranging an array antenna, such as the aforementioned antenna array or antenna element, not only broadband communication may be implemented, but also sensing echo signals may be received to implement enhanced sensing capability.

It should be noted that when the second antenna assembly includes an antenna element and there are a plurality of second paths for receiving the second sensing signal, as shown in FIG. 7, the communication device 10 may further include a multi-path signal processing unit 19, the multi-path signal processing unit is connected to a first switching control unit 173 in each of the second paths and the second port 2. The multi-path signal processing unit is used to process the received multi-path second sensing signals and transmit the processed signals to the sensing device.

Optionally, the multi-path signal processing unit 19 may include a multi-path phase modulation module for adjusting the phase of a receiving antenna array element to implement beam-forming and a multi-path combination-and-division module for combining the received multi-path RF signals (such as multi-path second sensing signals) into one path; where the multi-path combination-and-division module is connected to the multi-path phase modulation module, and the first switching control unit 173 in each of the second paths, and the multi-path phase modulation module is connected to the second port.

Further, in order to further implement integrated control, the communication device 10 may be further configured with a fourth port (also referred to as a power interface) and/or a fifth port (also referred to as a control interface); where the fourth port is used by the communication device 10 to provide electrical energy for the sensing device 20, and the fifth port is used by the communication device 10 to provide a control signal, such as a timing control signal, an on-off control signal and the like, for the sensing device 20. It can be understood that the fourth port of the communication device may be connected to an internal power supply, and the fifth port may be connected to a controller or other control unit, which is not limited here.

Further, in this embodiment, the structure of the sensing device 20 mentioned in the aforementioned implementations may be in a variety of forms, for example, the sensing device 20 may be as shown in FIG. 1, which includes a first port and a second port, the first port and the second port are used to be connected to the first port and the second port in the communication device 10, respectively, so as to implement transmission of the third sensing signal and the second sensing signal.

Based on this, as one possible implementation, in this embodiment, the sensing device 20 may include a sensing receiving unit, the sensing receiving unit is configured with the first port and the second port, wherein the first port is used to receive a third sensing signal, the second port is used to receive a second sensing signal, the third sensing signal is a part of a first sensing signal sent by a communication device, and the second sensing signal is a sensing signal received by the communication device.

In another implementation, corresponding to the third port 3 in the aforementioned communication device 10, the sensing receiving unit may further be configured with a third port 3, the third port 3 in the sensing receiving unit is connected to the third port 3 in the communication device 10 so as to transmit the third sensing signal and the second sensing signal received by the sensing receiving unit to the communication device 10 for processing.

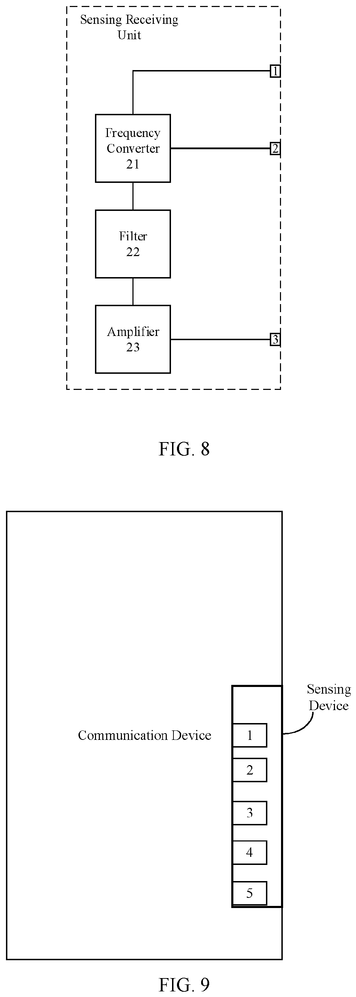

By way of example, considering that the sensing device 20 in the present application can eliminate self-interference generatedduring simultaneous sending and receiving of sensing signals, then as shown in FIG. 8, the sensing receiving unit in the sensing device 20 may include a frequency converter 21 (also known as a frequency mixer), a filter 22 and an amplifier 23; wherein the filter 22 is connected to the frequency converter 21 and the amplifier 23, the frequency converter 21 is connected to the first port 1 and the second port 2, and the amplifier 23 is connected to the third port 3.

In this embodiment, interference suppression between antennas exists for the simultaneous operation of sending and receiving sensing services. In this embodiment, the received sensing RF signal (i.e., the second sensing signal) is mixed with the locally-sent RF signal (i.e., the third sensing signal) by the frequency converter 21 so as to obtain a difference-frequency signal (the difference in frequency represents experienced time delay), and self-interference will form a zero-frequency signal, i.e., a DC component in the signal; in this regard, in this embodiment, the DC signal in the difference-frequency signal is filtered out by the filter 22 to eliminate the aforementioned self-interference; finally, the filtered difference-frequency signal is amplified by the amplifier 23 and then input into the communication device 10 by the third port for subsequent processing, such as analog-to-digital conversion, so as to implement the sensing function.

In addition, the present application can be used solve the problem that the existing communication and sensing systems need to be designed separately due to differences in functions and specifications by adding an interference suppression module (i.e., the filter 22 and the frequency converter 21) to the sensing device, which has the performance of high dynamic range and self-interference elimination, and also achieves the objectives of low implementation complexity, low power consumption, and high integration.

Further, the sensing receiving unit may further be configured with a fourth port and/or a fifth port corresponding to the fourth port and the fifth port in the communication device 10; wherein the fourth port is used to receive electric energy provided by the communication device, and the fifth port is used to receive a control signal provided by the communication device.

In this embodiment, the frequency converter 21, the filter 22 and the amplifier 23 are each connected to the fourth port, that is, the electrical energy required for the operation of the frequency converter 21, the filter 22 and the amplifier 23 can be provided by the communication device 10 through the fourth port.

Similarly, the frequency converter 21, the filter 22 and the amplifier 23 are connected to the fifth port. That is, the control signals required for the operation of the frequency converter 21, the filter 22 and the amplifier 23, can be provided by the communication device 10 through the fourth port.

Further, as shown in FIG. 9, an exemplary embodiment of the present application further provides an integrated communication sensing device, the integrated communication sensing device includes a communication device and a sensing device; wherein a first port of the communication device is connected to a first port of the sensing device, so as to couple a part of a first sensing signal (i.e., the third sensing signal) to be sent on the communication device to the sensing device by the first port, a second port of the communication device is connected to a second port of the sensing device, so as to transmit a second sensing signal received on the communication device to the sensing device by the second port, so that a sensing signal can be sent and received simultaneously by the communication device, and the self-interference caused by the simultaneous sending and receiving of a sensing signal can be eliminated by the sensing device, thereby achieving a more accurate sensing function.

Optionally, in case where the communication device is further configured with at least one of a third port, a fourth port and a fifth port, and the sensing device is further configured with at least one of a third port, a fourth port and a fifth port , at least one of the following (a)-(c) is satisfied.
(a) The third port of the communication device is connected to the third port of the sensing device, so as to transmit to the communication device a third sensing signal (i.e., a part of the first sensing signal) and the second sensing signal both the sensing device through the third port, so as to process the third sensing signal and the second sensing signal by means of the communication device, thereby implementing the sensing function.
(b) The fourth port of the communication device is connected to the fourth port of the sensing device, so that the communication device provides electrical energy required for operation for the sensing device by the fourth port.
(c) The fifth port of the communication device is connected to the fifth port of the sensing device, so that the communication device provides control signals required for operation, such as timing control signals, on/off control signals, etc., for the sensing device by the fifth port.

It should be noted that the communication device and the sensing device may be designed as a single unit or may be designed to be detachable, when the communication device and the sensing device are designed to be detachable, not only the hardware cost is reduced, but also product upgrades and maintenance are facilitated.

It can be understood that the relevant implementation process of the communication device and the sensing device in this embodiment may refer to, but is not limited to, the relevant descriptions of the communication device 10 and the sensing device 20 in the aforementioned embodiments, and achieve the same or corresponding technical effects, which will not be limited here to avoid repetition.

Based on this, the integrated communication sensing device provided in the present application is exemplarily introduced in combination with Example 1 and Example 2, the content is as follows.

### Example 1

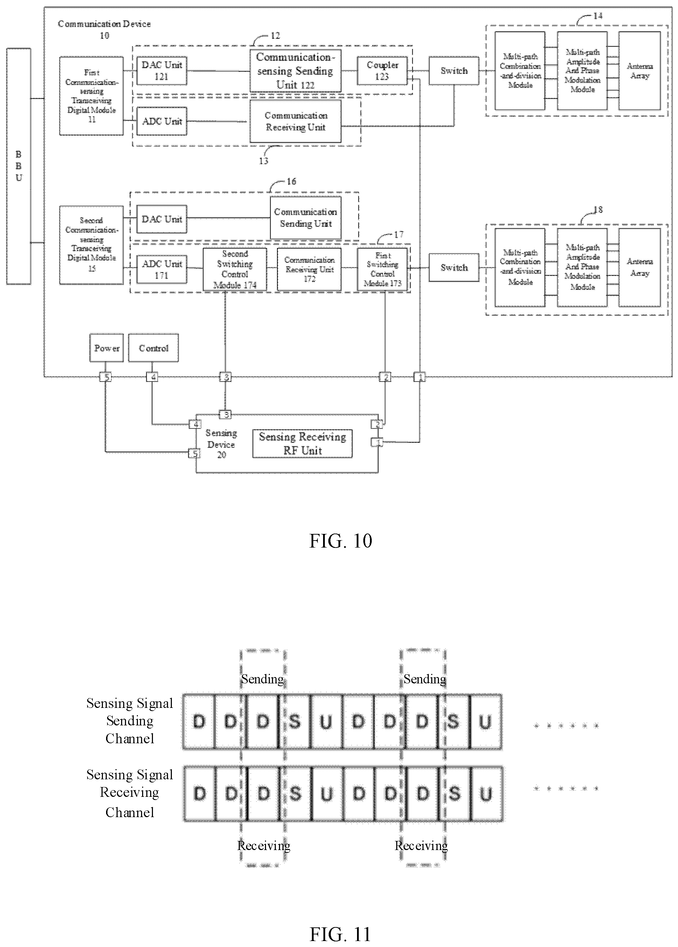

As shown in FIG. 10, in the case where a first sensing signal is sent through the first path in the communication device 10, a to-be-sent sensing data source may be digitally modulated and filtered by a first ICAS transceiving digital module 11, and then a processed digital signal is converted into a sensing radio frequency signal by a DAC unit 121, and the sensing radio frequency signal is processed by an ICAS transmission unit 122 for frequency conversion, filtering, and amplification, etc.; the processed sensing radio frequency signal (i.e., the first sensing signal) is divided into two paths, in one path, the sensing signal (i.e. the third sensing signal) is input to a sensing receiving RF unit in a sensing device 20 through afirst port 1 by means of the coupler 123, whereas in the other path, a multi-path combination-and-division module is accessed by the coupler 123 and a sending-and-receiving switching switch, and the sensing RF signal is divided into multi-path sensing RF signals, and the phase and amplitude of the sensing radio frequency signal of each path are modulated by the multi-path amplitude and phase modulation module so as to implement sending-beam-forming, and the sensing signal is sent out in the form of electromagnetic waves by an antenna array, and sending of the first sensing signal is completed at this time.

In the case where a second sensing signal is received through a second path in the communication device 10, also referring to FIG. 10, for the first sensing signal sent by the antenna array, the first sensing signal is reflected back to the antenna array in a second antenna assembly 18 of the communication device by an obstacle, and then the amplitude and phase of a received second sensing signal are modulated by the multi-path amplitude and phase modulation module to implement receiving-beam-forming; then processed second sensing receiving signals are combined into one path by a multi-path combination-and-division module, and a second receiving branch 17 is switched to by the sending-and-receiving-switching switch, the second receiving branch 17 includes a communication receiving channel and a sensing receiving channel, at this time, a first switching control module 173 may be used to turn off the communication receiving channel and turn on the communication sensing receiving channel, so as to input the second sensing signal through the second port 2 into the sensing receiving channel, that is, the sensing device 20; then the sensing device 20 mixes the second sensing signal with the third sensing signal coupled back from the first port 1 by using a frequency converter so as to obtain a difference-frequency signal, the difference in frequency represents experienced time delay, and self-interference will form a zero-frequency signal, i.e., a DC component in the signal, this DC component is filtered out by the filter shown in FIG. 8 to eliminate self-interference, the time delay of the second sensing signal sent back by the obstacle is longer, no zero-frequency signal will be formed after mixing, as a result, it will not be filtered out by the filter; the signal after amplification is switched through the third port 3 and a second switching control module 174 to enter an ADC unit 171 for processing, so as to convert a radio frequency signal into a digital signal and input it into a second ICAS transceiving digital module 15, the second ICAS transceiving digital module 15 will digitally demodulate and filter the sensing receiving signal, the direction angle and distance of obstacle can be obtained by analyzing the sensing signal (that is, the third sensing signal and the second sensing signal), thereby implementing the sensing function.

It should be noted that the aforementioned sending-and-receiving-switching switch is used for switching of sending and receiving links in the time division duplex (TDD) mode. That is to say, the integrated communication sensing device provided in Example 7 can operate in the TDD mode to implement switching of sending and receiving links.

In addition, the communication function and sensing function of the communication device may be switched in different time slots, as shown in FIG. 11, the sensing function is performed in several time slots, and the communication function remains unchanged in the other time slots, the ratio of communication and sensing may be flexibly adjusted, in this way, the time of communication and sensing may be dynamically allocated based on the original communication frame according to the real-time load of the system, and the communication-sensing integrated resources may be flexibly coordinated and allocated to meet the needs of different scenarios.

Optionally, the communication device 10 in this example 1 may be a network-side device, such as a base station, etc., or a terminal, etc., which is not limited here.

In this example 1, the integrated communication sensing device also has the function of physical-digital space sensing, with the coordination and sharing of communication-sensing integrated software and hardware resources, each component in the device implements the deep integration and mutual enhancement of multi-dimensional sensing, collaborative communication, and intelligent computing functions, thereby enabling the network to have the ability of new information flow intelligent interaction and processing as well as wide-area intelligent collaboration.

In addition, the present application can be used in typical application scenarios of local space and open space.

### Example 2

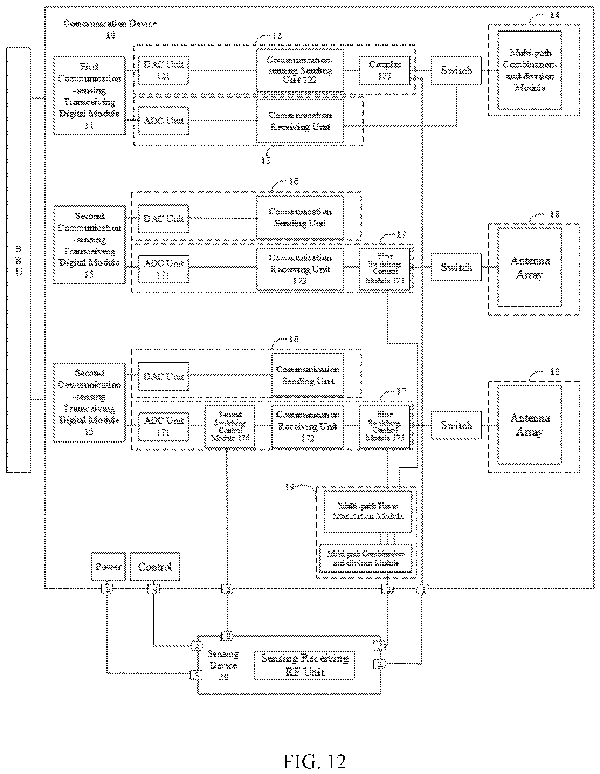

As shown in FIG. 12, which is a schematic structural diagram of an integrated communication sensing device provided by another exemplary embodiment of the present application. Compared with the communication-sensing integrated integration device provided in Example 1, the difference between the two lies in that there is no multi-path combination-and-division module, multi-path amplitude and phase modulation module, or antenna array in the first antenna assembly 14 in the first channel and the second antenna assembly 18 in the second channel in Example 2 , a, instead, each channel is changed into an antenna array. In this regard, when communication and sensing signals are sent, the beam-forming function can be implemented by digitally modulating the phase between channels (i.e., the second ICAS transceiving digital module 15), so as to send signals in different directions; however, when second sensing signals are received, the second sensing signals received in all the second channel need to be input to the multi-path phase modulation module through the first switching control module 173, so as to modulate the phase of second sensing signals of each path, then the second sensing signals are combined into the sensing device 12 by the multi-path combination-and-division module, the second sensing signals are processed by the sensing device, such as interference elimination processing.

It should be noted that, whether in the aforementioned Example 1 or Example 2, an antenna assembly used to send a sensing signal cannot be shared with an antenna assembly used to receive a sensing signal, as a result, sensing signal receiving can be isolated from sensing signal sending so as to avoid interference, and radio frequency leakage can also be avoided. For example, in FIG. 10, the first antenna assembly 14 is used to send a sensing signal, and the second antenna assembly 18 is used to receive a sensing signal.

In addition, in actual communication, the integrated communication sensing device or the communication device may be as shown in FIG. 10 or FIG. 12, but may also include more or fewer components than those shown in FIG. 10 or FIG. 12, such as a first path, a second path, etc., which is not limited here.

In addition to software implementation methods, the electronic device of the present application does not exclude other implementation methods, such as logic devices or a combination of software and hardware, etc., that is, the execution subject of the following processing flow is not limited to each logic unit, but may also be hardware or logic devices.

In summary, the above descriptions are merely preferred embodiments of the present application and are not intended to limit the protection scope of the present application. Any modification, equivalent replacement, improvement, etc., that is made within the spirit and principle of the present application should be included within the protection scope of the present application.

The system, device, module or unit described in the above embodiments may be specifically implemented by a computer chip or entity, or a product with certain functions. A typical implementation device is a computer. Specifically, the computer may be, for example, a personal computer, a laptop computer, a cellular phone, a camera phone, a smart phone, a personal digital assistant, a media player, a navigation device, an email device, a game console, a tablet computer, a wearable device, or a combination of any of these devices.

Computer readable media include permanent and non-permanent, removable and nonremovable media that may be used to store information by any method or technology. Information may be computer-readable instructions, data structures, program modules or other data. Examples of computer storage media include, but are not limited to, Phase Change Memory (PCM), Static Random-Access Memory (SRAM), Dynamic Random Access Memory (DRAM), other types of random access memory (RAM), Read-Only Memory (ROM), Electrically Erasable Programmable Read Only Memory (EEPROM), Flash memory or other memory technology, Compact Disc Read-Only Memory (CD-ROM), Digital Video Disc (DVD) or other optical storage, magnetic cassettes, magnetic tape magnetic disk storage or other magnetic storage devices or any other non-transmission media that may be used to store information that is accessible to a computing device. According to the definition in this document, computer-readable media do not include temporary computer-readable media (transitory media), such as modulated data signals and carrier waves.

It should be noted that, the terms "include", "comprise" or any other variations thereof are intended to cover a non-exclusive inclusion, such that a process, method, article, or device that comprises a series of elements not only comprises those elements, but also comprises other elements that are not explicitly listed, or further comprises elements that are inherent to the process, method, article, or device. Without further limitations, an element limited by "comprising a..." does not exclude the presence of other identical elements in the process, method, article, or device that includes the element.

Each embodiment in this description is described in a progressive manner, and the same or similar parts between the embodiments may be referred to each other, and each embodiment focuses on the differences from other embodiments. In particular, for the system embodiment, since it is basically similar to the method embodiment, the description is relatively simple, and the relevant parts may be referred to the partial description of the method embodiment.

## Claims

1. A communication device, comprising:
at least one first path used for sending a first communication signal and/or a first sensing signal, and receiving a second communication signal; and
at least one second path used for sending a third communication signal, and receiving a fourth communication signal and/or a second sensing signal;
wherein the first path is configured with a first port, the first port is used for coupling a part of the first sensing signal to a sensing device; and
the second path is configured with a second port, the second port is used for transmitting the second sensing signal to the sensing device.

2. The communication device of claim 1, wherein the first path comprises:
a first integrated communication and sensing called ICAS transceiving digital module;
a first sending branch used for sending the first communication signal and/or the first sensing signal;
a first receiving branch used for receiving the second communication signal; and
a first antenna assembly;
wherein the first ICAS transceiving digital module is connected to the first receiving branch and the first sending branch, the first antenna assembly is connected to the first receiving branch and the first sending branch, and the first sending branch is connected to the first port.

3. The communication device of claim 2, wherein the first sending branch comprises a digital-to-analog conversion called DAC unit, an ICAS sending unit and a coupler;
wherein the DAC unit is connected to the first ICAS transceiving digital module and the ICAS sending unit, and the coupler is connected to the ICAS sending unit, the first antenna assembly and the first port.

4. The communication device of claim 1, wherein the second path comprises:
a second ICAS transceiving digital module;
a second sending branch used for sending the third communication signal;
a second receiving branch used for sending the fourth communication signal and/or the second sensing signal; and
a second antenna assembly;
wherein the second ICAS transceiving digital module is connected to the second sending branch and the second receiving branch, the second antenna assembly is connected to the second sending branch and the second receiving branch, and the second receiving branch is connected to the second port.

5. The communication device of claim 4, wherein the second receiving branch comprises a digital-to-analog conversion called ADC unit, a communication receiving unit and a first switching control unit;
the ADC unit is connected to the second ICAS transceiving digital module and the communication receiving unit, the first switching control unit is connected to the communication receiving unit, and the second antenna assembly and the second port;
wherein upon the condition that the second sensing signal is received , the first switching control unit is controlled to connect the second antenna assembly to the second port, and disconnect the second antenna assembly from the communication receiving unit; or
upon the condition that the fourth communication signal is received, the first switching control unit is controlled to connect the second antenna assembly to the communication receiving unit, and disconnect the second antenna assembly from the second port.

6. The communication device of claim 5, wherein the second receiving path is further configured with a third port;
the third port is used to connect to the sensing device, so as to transmit to the communication device a third sensing signal and the second sensing signal both received by the sensing device, wherein the third sensing signal is a part of the first sensing signal.

7. The communication device of claim 6, wherein the second receiving branch further comprises a second switching control unit;
the second switching control unit is connected to the ADC unit, the communication receiving unit and the third port;
wherein upon the condition that the second sensing signal and/or the third sensing signal are/is received, the second switching control unit is controlled to connect the ADC unit to the third port, and disconnect the ADC unit from the communication receiving unit; or
upon the condition that the fourth communication signal is received, the second switching control unit is controlled to connect the ADC unit to the communication receiving unit, and disconnect the ADC unit from the third port.

8. The communication device of claim 4 or 7, wherein the first switching control unit comprises any one of a single-pole multi-throw switch, a coupler, or a power divider; and/or
the second switching control unit comprises any one of a single-pole multi-throw switch, a coupler, or a power divider.

9. The communication device of any one of claims 1-8, in the case where there are a plurality of second paths, the communication device further comprises a multi-path signal processing unit, the multi-path signal processing unit is connected to a first switching control unit in each of the second paths and the second port;
wherein the multi-path signal processing unit is used to process the received multi-path second sensing signals, and transmit processed signals to the sensing device.

10. The communication device of claim 9, wherein the multi-path signal processing unit comprises a multi-path phase modulation module and a multi-path combination-and-division module;
wherein the multi-path combination-and-division module is connected to the multi-path phase modulation module, and the first switching control unit in each of the second paths, and the multi-path phase modulation module is connected to the second port.

11. The communication device of any one of claims 1-10, wherein the communication device is further configured with a fourth port and/or a fifth port;
wherein the fourth port is used by the communication device to provide electrical energy for the sensing device, and the fifth port is used by the communication device to provide a control signal for the sensing device.

12. A sensing device, comprising:
a sensing receiving unit, the sensing receiving unit is configured with a first port and a second port;
wherein the first port is used to receive a third sensing signal, the second port is used to receive a second sensing signal, the third sensing signal is a part of a first sensing signal sent by a communication device, and the second sensing signal is a sensing signal received by the communication device.

13. The sensing device of claim 12, wherein the sensing receiving unit is further configured with a third port, and the third port is used to transmit to the communication device the third sensing signal and the second sensing signal both received by the sensing receiving unit for processing.

14. The sensing device of claim 12, wherein the sensing receiving unit is further configured with a fourth port and/or a fifth port;
wherein the fourth port is used to receive electric energy provided by the communication device, and the fifth port is used to receive a control signal provided by the communication device.

15. The sensing device of any one of claims 12-14, wherein the sensing receiving unit comprises a frequency converter, a filter and an amplifier;
wherein the filter is connected to the frequency converter and the amplifier, the frequency converter is connected to the first port and the second port, and the amplifier is connected to the third port.

16. The sensing device of claim 15, wherein the frequency converter, the filter and the amplifier are connected to the fourth port; and
the frequency converter, the filter and the amplifier are connected to the fifth port.

17. An integrated communication sensing device, comprising a communication device and a sensing device;
wherein a first port of the communication device is connected to a first port of the sensing device, so as to couple a part of a first sensing signal sent by the communication device to the sensing device; and
a second port of the communication device is connected to a second port of the sensing device, so as to transmit a second sensing signal received by the communication device to the sensing device.

18. The integrated communication sensing device of claim 17, wherein in case where the communication device is further configured with at least one of a third port, a fourth port and a fifth port, and the sensing device is further configured with at least one of a third port, a fourth port and a fifth port, at least one of the following is satisfied:
the third port of the communication device is connected to the third port of the sensing device, so as to transmit to the communication device a third sensing signal and the second sensing signal both received and processed by the sensing device, wherein the third sensing signal is a part of the first sensing signal;
the fourth port of the communication device is connected to the fourth port of the sensing device, so that the communication device provides electrical energy for the sensing device; and
the fifth port of the communication device is connected to the fifth port of the sensing device, so that the communication device provides a control signal for the sensing device.

19. The integrated communication sensing device of claim 17, wherein the communication device is detachably connected to the sensing device.
